# EUROPÄISCHE PATENTSCHRIFT

(11) **EP 2 718 995 B1**
(45) Veröffentlichungstag und Bekanntmachung des Hinweises auf die Patenterteilung: **16.03.2016**
(21) Anmeldenummer: 12725748.3
(22) Anmeldetag: 04.06.2012
(51) Int. Cl.: H01M 2/02, H01M 2/10

(54) **BATTERIEMODUL, BATTERIE MIT DIESEM BATTERIEMODUL UND KRAFTFAHRZEUG MIT DIESER BATTERIE**
BATTERY MODULE, BATTERY COMPRISING SAID BATTERY MODULE AND MOTOR VEHICLE EQUIPPED WITH SAID BATTERY
MODULE DE BATTERIE, BATTERIE POURVUE DE CE DERNIER ET VÉHICULE AUTOMOBILE ÉQUIPÉ DE CETTE BATTERIE

(30) Priorität: 10.06.2011 DE 102011077340
(43) Veröffentlichungstag der Anmeldung: 16.04.2014
(73) Patentinhaber: Robert Bosch GmbH, 70442 Stuttgart (DE); Samsung SDI Co., Ltd., Yongin-si Gyeonggi-do 446-577 (KR)
(72) Erfinder: FINK, Holger, 70567 Stuttgart (DE)
(74) Vertreter: Bee, Joachim
(86) Internationale Anmeldenummer: PCT/EP2012/060481
(87) Internationale Veröffentlichungsnummer: WO 2012/168177

(56) Entgegenhaltungen:
- DE-A1-102010 029 872
- US-A1- 2009 239 137

## Beschreibung

Die vorliegende Erfindung betrifft ein Batteriemodul, eine Batterie mit diesem Batteriemodul und ein Kraftfahrzeug mit dieser Batterie, wobei das Batteriemodul wenigstens eine auf einer Bodenplatte angeordnete Batteriezelle umfasst, wobei die Batteriezelle und die Bodenplatte mit wenigstens einem Befestigungssystem miteinander ortsfest verbunden sind.

### Stand der Technik

Es ist bekannt, den Grundaufbau einer Batterie so zu gestalten, dass in der Batterie jeweils mehrere Batteriezellen in einem Batteriemodul zusammengefasst sind und mehrere Batteriemodule wiederum in einer Untereinheit angeordnet sind. Die Batterie ist dann aus mehreren dieser Untereinheiten gebildet.

Das Zusammenfügen der Batteriezellen zu Batteriemodulen erfolgt dabei meist durch Schraub- oder Nietverbindungen, wodurch für den Zusammenbau eine Verwendung von Werkzeugen und ein erhöhter Montageaufwand nötig sind.

Aus der DE 10 2010 029 872 A1 ist eine Batteriebaugruppe für Hybrid- oder Elektrofahrzeuge bekannt, welche ein Zellmodul mit einer Mehrzahl von Speicherzellen umfasst, wobei die Speicherzellen mittels ein oder mehrerer Befestigungsmittel mit dem Zellmodulboden verbindbar sind.

Ferner ist aus der US 2009/0239137 A1 ein Batteriepack bekannt, dessen Batteriezellen mit der Deckelklappe des Batteriepacks verbindbar sind.

### Offenbarung der Erfindung

Erfindungsgemäß wird ein Batteriemodul zur Verfügung gestellt, welches wenigstens eine auf einer Bodenplatte angeordnete Batteriezelle umfasst. Die Batteriezelle und die Bodenplatte sind mit wenigstens einem Befestigungssystem miteinander ortsfest verbunden. Dabei weist das Befestigungssystem wenigstens zwei ineinander einrastende Befestigungspartner auf, wobei der erste Befestigungspartner an der Batteriezelle und der zweite Befestigungspartner an der Bodenplatte angeordnet sind. Der zweite Befestigungspartner ist durch eine Aussparung in der Bodenplatte und eine an die Aussparung angrenzende Fläche der Bodenplatte gebildet. Der erste Befestigungspartner ist ein in die Aussparung ragender und die an die Aussparung angrenzende Fläche der Bodenplatte hintergreifender Federarm.

Die Batterie ist dabei bevorzugt eine Li-lonen Batterie.

Hiermit ist es vorteilhaft ermöglicht, die Batteriezelle schnell, einfach und zuverlässig durch Einrasten der wenigstens einen Batteriezelle in die Bodenplatte zusammenzubauen. Zudem ist vorteilhaft für eine Montage lediglich die Zugänglichkeit aus einer einzigen Richtung erforderlich.

Durch die Kontur der Befestigungspartner wird beim Zusammenfügen der Batteriezelle und der Bodenplatte wenigstens einer der Befestigungspartner zu einer elastischen Verformung gezwungen, aus welcher dieser beim Einrasten zurückfedert und den anderen Befestigungspartner hintergreift. Dadurch wird vorteilhaft kein zusätzliches Werkzeug für die Montage der Batteriezelle auf der Bodenplatte benötigt.

Weiterhin ist mit dem Befestigungssystem vorteilhaft eine eindeutige Position der Batteriezelle auf der Bodenplatte des Batteriemoduls vorgegeben. Damit lässt sich der Montagevorgang der erfindungsgemäßen Batterie leicht in einen automatisierten Prozess einbeziehen.

Der erste Befestigungspartner ist in dieser Anmeldung dadurch definiert, dass er an der Batteriezelle angeordnet ist, und der zweite Befestigungspartner ist dadurch definiert, dass er an der Bodenplatte angeordnet ist.

In einer bevorzugten Ausgestaltung der Erfindung ist vorgesehen, dass durch die zwei Befestigungspartner wenigstens ein Formschluss in einer senkrecht von der Bodenplatte weisenden Richtung hergestellt ist.

Hiermit ist vorteilhaft direkt nach einer Montage der Batteriezelle auf der Bodenplatte ein Abheben der Batteriezelle von der Bodenplatte verhindert.

In einer weiteren bevorzugten Ausgestaltung der Erfindung ist vorgesehen, dass die wenigstens eine Batteriezelle eine prismatische Form aufweist.

Hiermit ist vorteilhaft eine kompakte Bauweise des Batteriemoduls ermöglicht, da bei einer Aneinanderreihung der prismatischen Körper kein ungenutzter. Zwischenraum entsteht.

Eine Aussparung stellt vorteilhaft die einfachste und kostengünstigste Ausgestaltung dar, mit der ein Hinterschnitt erzeugt ist, der zum Einrasten des anderen Befestigungspartners dient. Die Aussparung ist dabei bevorzugt ein Loch, insbesondere ein Sackloch.

Bevorzugt ist die Aussparung dabei in der Bodenplatte unterhalb der Batteriezelle angeordnet.

Hiermit ist vorteilhaft erreicht, dass kein zusätzlicher Platzbedarf innerhalb der Batteriezelle für das Befestigungssystem entsteht.

In einer weiteren bevorzugten Ausgestaltung der Erfindung ist vorgesehen, dass die Bodenplatte wärmeableitend, also eine Kühlplatte ist.

Mit der Ausgestaltung der Bodenplatte als Kühlplatte ist die wenigstens eine Batteriezelle vorteilhaft leichter zu temperieren.

In einer weiteren bevorzugten Ausgestaltung der Erfindung ist vorgesehen, dass der erste Befestigungspartner einteilig mit einem Gehäuse der Batteriezelle ausgebildet ist.

Hiermit ist die erfindungsgemäße Batterie vorteilhaft aus weniger Einzelteilen aufgebaut.

In einer weiteren bevorzugten Ausgestaltung der Erfindung ist vorgesehen, dass die Befestigungspartner an einer Seite der Batteriezelle angeordnet sind, die einer Seite gegenüberliegt, auf der Terminals der Batteriezelle angeordnet sind.

Mit dieser Anordnung ist vorteilhaft eine platzsparende Anordnung mehrerer Batteriemodule nebeneinander möglich, da die Seitenflächen eben ausgeführt werden können.

In einer weiteren bevorzugten Ausgestaltung der Erfindung ist vorgesehen, dass zwischen der Batteriezelle und der Bodenplatte eine, eine Vorspannkraft zwischen der Batteriezelle und der Bodenplatte aufbringende Zwischenschicht angeordnet ist.

Hiermit ist das Befestigungssystem vorteilhaft zusätzlich gegen ein Lösen der Befestigungspartner voneinander gesichert.

Erfindungsgemäß wird zudem eine Batterie bereitgestellt, welche wenigstens eine erfindungsgemäße Batteriezelle in einer der zuvor genannten Ausgestaltungen aufweist. Die Vorteile des erfindungsgemäßen Batteriemoduls als Bauteil kommen so auch der Batterie als Baugruppe zugute.

Erfindungsgemäß wird weiterhin ein Kraftfahrzeug bereitgestellt mit der Batterie, welche wenigstens eine erfindungsgemäße Batteriezelle in einer der zuvor genannten Ausgestaltungen aufweist, wobei die Batterie mit einem Antriebssystem des Kraftfahrzeugs verbunden ist.

Vorteilhafte Weiterbildungen der Erfindung sind in den Unteransprüchen angegeben und in der Beschreibung ausgeführt.

Der Begriff Batterie schließt in dieser Anmeldung auch Batteriesysteme, Akkumulatoren, Akkumulatorbatterien, Akkumulatorsysteme, insbesondere Li-lonen-Systeme oder Li-Polymer-lonen-Systeme mit ein.

### Zeichnungen

Die vorliegende Erfindung wird anhand der Zeichnungen und der nachfolgenden Beschreibung näher erläutert. Es zeigen:
Figur 1 den Grundaufbau einer Batterie nach dem Stand der Technik,
Figur 2 ein Batteriemodul nach dem Stand der Technik,
Figur 3 eine Ausführung eines erfindungsgemäßen Batteriemoduls in einer Prinzipskizze,
Figur 4 eine weitere Ausführung des Batteriemoduls in einer Prinzipskizze, und
Figur 5 eine Batteriezelle im Querschnitt.

### Ausführungsformen der Erfindung

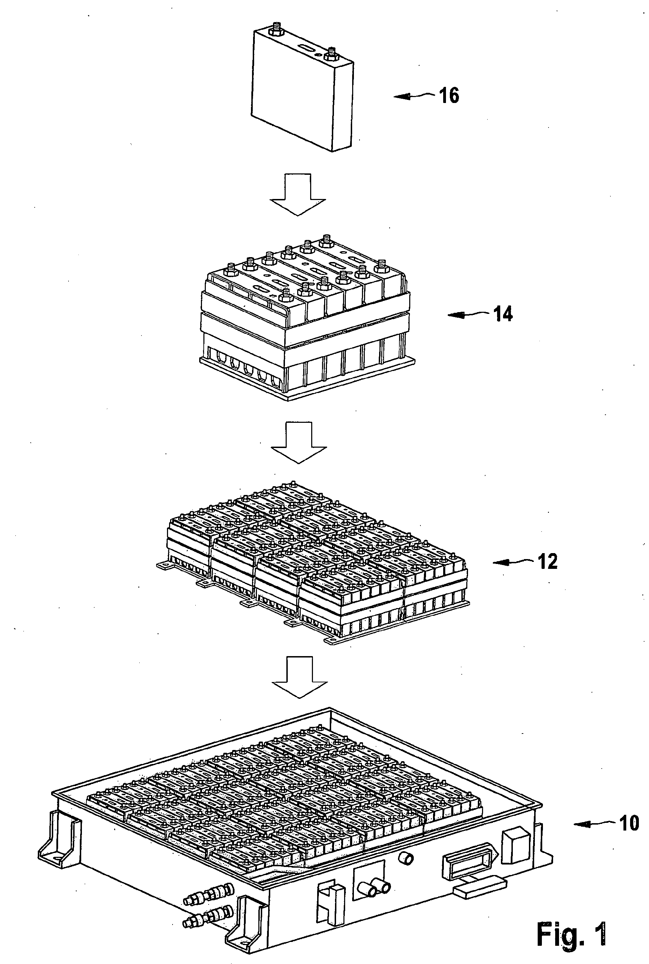

In Figur 1 ist beispielhaft und nicht beschränkend der Grundaufbau einer Batterie 10 nach dem Stand der Technik gezeigt. Die erfindungsgemäße Batterie 10 weist prinzipiell den gleichen Grundaufbau auf. In der Batterie 10 sind jeweils mehrere Batteriezellen 16 in einem Batteriemodul 14 zusammengefasst. Mehrere Batteriemodule 14 sind jeweils in einer Untereinheit 12 angeordnet. Und mehrere Untereinheiten 12 bilden hier die Batterie 10.

Es ist auch möglich, dass die Batterie 10 lediglich eine einzige Untereinheit 12 oder nur ein einziges Batteriemodul 14 umfasst.

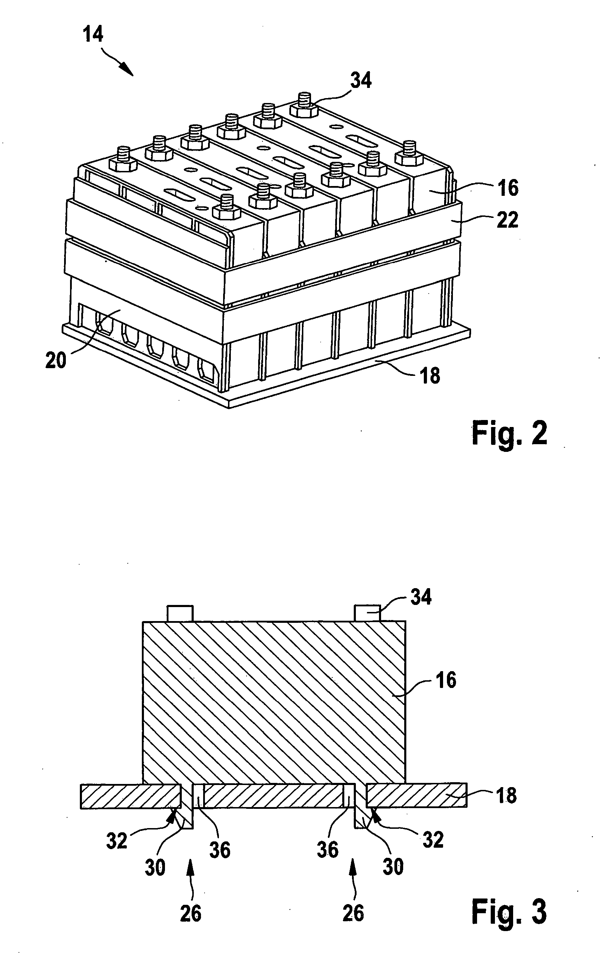

In Figur 2 ist beispielhaft und nicht beschränkend ein Batteriemodul 14 nach dem Stand der Technik gezeigt Das erfindungsgemäße Batteriemodul 14 beruht auf diesem Aufbau. In der abgebildeten Variante weist das Batteriemodul 14 sechs Batteriezellen 16 auf. Es können auch mehr oder weniger als sechs Batteriezellen 16 pro Batteriemodul 14 sein. Die Anzahl der Batteriezellen 16 richtet sich nach den geforderten Leistungs- und Energieparametern des Batteriemoduls 14 und den Leistungs- und Energieparametern der einzelnen Batteriezellen 16.

Die Batteriezellen 16 weisen jeweils einen im Wesentlichen prismatischen Grundkörper auf, bevorzugt einen im Wesentlichen quaderförmigen Grundkörper, und sind nebeneinander gemeinsam auf einer Bodenplatte 18 angeordnet. Das Batteriemodul 14 weist dadurch ebenfalls eine im Wesentlichen prismatische Grundgestalt auf, bevorzugt eine im Wesentlichen quaderförmige Grundgestalt.

Bevorzugt sind die Batteriezellen 16 dabei mit ihrer Unterseite auf der Bodenplatte 18 montiert, also der Körperseite, die der Körperseite gegenüberliegt, auf welcher sich die Terminals 34 befinden.

Zum Zusammenhalt der einzelnen Batteriezellen 16 sind diese von wenigstens einem Spannband 22 umschlossen Um dabei die äußeren Batteriezellen 16, also jene, die nur zu einer Seite an eine weitere Batteriezelle 16 grenzen, nicht zu stark zu beanspruchen, sind an den Stirnseiten der Batteriezelle 14 bevorzugt Druckplatten 20 vorgesehen. Die Druckplatten 20 verteilen von den Spannbändern 22 ausgeübte Kräfte großflächiger auf die äußeren Batteriezellen 16.

Optional sind zwischen den einzelnen Batteriezellen 16 Wärmeleitbleche angeordnet, um die einzelnen Batteriezellen 16 besser thermisch miteinander zu vernetzen.

Figur 3 zeigt in einer Prinzipskizze beispielhaft und nicht beschränkend eine Ausführung eines erfindungsgemäßen Batteriemoduls 14. Dargestellt ist ein Querschnitt parallel zu einer Stirnseite des Batteriemoduls 14.

Gezeigt ist das Batteriemodul 14 mit einer Batteriezelle 16 auf einer Bodenplatte 18. In erfindungsgemäßer Ausgestaltung weisen die Batteriezelle 16 und die Bodenplatte 18 Befestigungssysteme 26 auf. Abgebildet sind zwei spiegelbildlich zueinander angeordnete Befestigungssysteme 26. Bevorzugt sind die Befestigungssysteme 26 dabei an einer Seite der Batteriezelle 16 angeordnet, die sich gegenüber der Seite der Batteriezelle 16 mit den Terminals 34 befindet.

Erfindungsgemäß ist wenigstens ein Befestigungssystem 26 vorgesehen. In Abhängigkeit von Größe und Masse der Batteriezelle 16 ist erfindungsgemäß die Anordnung weiterer Befestigungssysteme 26 vorgesehen. Diese können auch versetzt und/oder in einem Winkel zueinander angeordnet sein. Auch ist es erfindungsgemäß denkbar, dass verschiedene Ausführungen von Befestigungssystemen 26 gleichzeitig vorhanden sein können.

Die in Figur 3 gezeigten Befestigungssysteme 26 weisen jeweils zwei Befestigungspartner, einen ersten 30 und einen zweiten 32 auf. Dabei ist der erste Befestigungspartner 30 in dieser Anmeldung dadurch definiert, dass er an der Batteriezelle 16 angeordnet ist, und der zweite Befestigungspartner 32 ist dadurch definiert, dass er an der Bodenplatte 18 angeordnet ist.
Die ersten Befestigungspartner 30 sind erfindungsgemäß jeweils durch einen Federarm mit einem Hinterschnitt gebildet. Und die zweiten Befestigungspartner 32 sind durch jeweils eine Aussparung 36 und eine an die Aussparung angrenzende Fläche der Bodenplatte 18 gebildet.

Der Federarm weist im Wesentlichen eine längliche Gestallt auf, die durch Biegung elastisch verformbar ist. An seinem freien Ende ist der Federarm mit einer schrägen Fläche versehen, durch welche diese elastische Verbiegung beim Abfahren der Kontur des zweiten Befestigungspartners 32 verursacht wird. Hinter der Schrägen weist der Federarm einen Hinterschnitt auf. Dieser stellt beim Einrasten der Befestigungspartner 30 und 32 zusammen mit einer Fläche des zweiten Befestigungspartners 32 einen Formschluss entgegen der Montagerichtung her. Ein Abheben der Batteriezelle 16 von der Bodenplatte 18 ist damit verhindert.

Beim Zusammenfügen der Batteriezelle 16 mit der Bodenplatte 18 werden die Federarme von der Kontur der Bodenplatte 18, also den Aussparungen 36 beiseite gedrückt und federn nach dem Passieren der Aussparungen 36 in ihre normale, unverformte Position zurück. Die Bodenplatte 18 ist dadurch jeweils vom Hinterschnitt der Federarme hintergriffen. Durch die Wandung der Aussparung 36 ist der jeweilige Federarm zudem wenigstens in einer Querrichtung zur Montagerichtung arretiert. Bevorzugt sind die Befestigungssysteme 26 so ausgerichtet, dass die verschiedenen Befestigungssysteme 26 die ersten Befestigungspartner 30 in unterschiedliche Querrichtungen arretieren.
In Abwandlung zu der in Figur 3 gezeigten Ausführung können die Aussparungen 36 auch am Rand der Bodenplatte 18 angeordnet sein. Zudem ist eine Ausführung der Aussparungen 36 als Sackloch möglich, welches eine Tiefe aufweist, die geringer ist, als die Dicke der Bodenplatte 18. Die Aussparung 36 reicht also nicht bis an die Unterseite der Bodenplatte 18. Das Sackloch weist dann selbst im Inneren einen Hinterschnitt auf, in den der erste Befestigungspartner 30 einrasten kann.

Je nach Ausführungsform der Aussparung 36 ist die Höhe des ersten Befestigungspartners 30 so bemessen, dass die zumindest eine Batteriezelle 16 mit einer definierten Kraft auf der Bodenplatte 18 aufliegt. Gegebenenfalls ist dazu eine Zwischenschicht 28 zwischen der Batteriezelle 16 und der Bodenplatte 18 angeordnet.

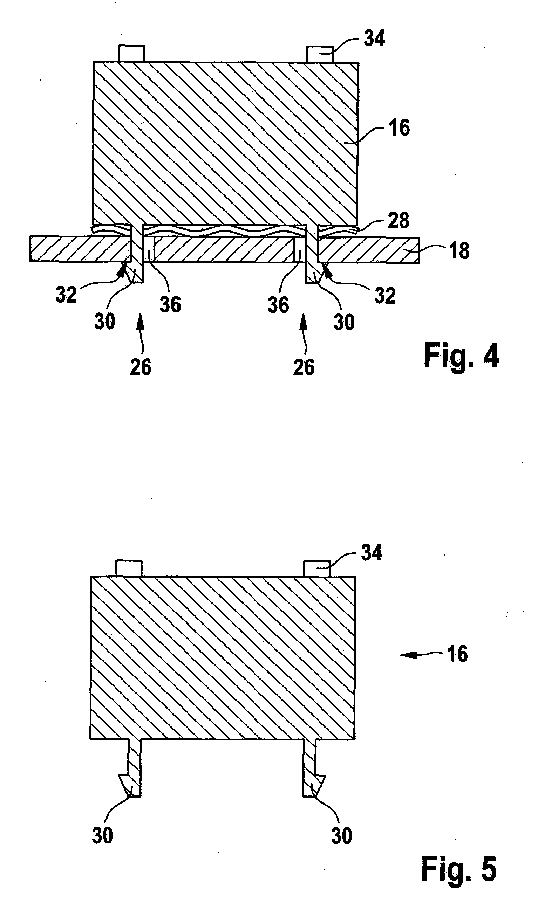

Figur 4 zeigt in einer Prinzipskizze beispielhaft und nicht beschränkend eine weitere Ausführung des erfindungsgemäßen Batteriemoduls 14. Dargestellt ist ein Querschnitt parallel zu einer Stirnseite des Batteriemoduls 14.

Ergänzend zu der in der Figur 3 gezeigten Ausgestaltung verfügt die Variante der Figur 4 über eine zwischen der Batteriezelle 16 und der Bodenplatte 18 angeordnete Zwischenschicht 28. Die Zwischenschicht 28 ist erfindungsgemäß optional angeordnet.

Die Zwischenschicht 28 übt eine definierte Vorspannkraft auf die Batteriezelle 16 und die Bodenplatte 18 in montiertem Zustand aus. Die Zwischenschicht 28 weist dabei elastische Verformungseigenschaften auf. Dies wird durch die wellenförmige Darstellung in Figur 4 symbolisiert. Die tatsächliche Gestalt der Zwischenschicht 28 kann von der dargestellten abweichen.

Figur 5 zeigt beispielhaft und nicht beschränkend einen Querschnitt einer Batteriezelle 16 der erfindungsgemäßen Batterie. Die Batteriezelle 16 weist zwei integrierte erste Befestigungspartner 30 auf. Die Zahl und die Anordnung der Befestigungspartner 30 kann dabei variieren, sie muss nicht der Anzahl an zweiten Befestigungspartnern 32 der hier nicht mit abgebildeten Bodenplatte 18 entsprechen, sodass mehrere Möglichkeiten für den Ort einer Fixierung der Batteriezelle 16 auf der Bodenplatte 18 geschaffen sind.
Die ersten Befestigungspartner 30 sind als Federarme ausgeformt. Erfindungsgemäß sind die Batteriezelle 16 und die ersten Befestigungspartner 30 bevorzugt einteilig ausgeführt. Entsprechend der Form der ersten Befestigungspartner 30 sind die zweiten Befestigungspartner 32 korrespondierend zu den ersten Befestigungspartnern 30 ausgebildet, sodass ein Einrasten in definierter Position ermöglicht ist.

## Patentansprüche

1. Batteriemodul (14) mit wenigstens einer auf einer Bodenplatte (18) angeordneten Batteriezelle (16), wobei die Batteriezelle (16) und die Bodenplatte (18) mit wenigstens einem Befestigungssystem (26) miteinander ortsfest verbunden sind, wobei
das Befestigungssystem (26) wenigstens zwei ineinander einrastende und einen Formschluss herstellende Befestigungspartner (30, 32) aufweist, wobei der erste Befestigungspartner (30) an der Batteriezelle (16) und der zweite Befestigungspartner (32) an der Bodenplatte (18) angeordnet ist und wobei der zweite Befestigungspartner (32) durch eine Aussparung (36) in der Bodenplatte (18) und eine an die Aussparung (36) angrenzende Fläche der Bodenplatte (18) gebildet ist, **dadurch gekennzeichnet, dass** der erste Befestigungspartner (30) ein in die Aussparung (36) ragender und die an die Aussparung (36) angrenzende Fläche der Bodenplatte (18) hintergreifender Federarm ist.

2. Batteriemodul (14) nach Anspruch 1, wobei durch die zwei Befestigungspartner (30, 32) wenigstens ein Formschluss in einer senkrecht von der Bodenplatte (18) weisenden Richtung hergestellt ist.

3. Batteriemodul (14) nach Anspruch 1 oder 2, wobei die wenigstens eine Batteriezelle (16) eine prismatische Form aufweist.

4. Batteriemodul (14) nach einem der vorhergehenden Ansprüche, wobei die Aussparung (36) in der Bodenplatte (18) unterhalb der Batteriezelle (16) angeordnet ist.

5. Batteriemodul (14) nach einem der vorhergehenden Ansprüche, wobei der erste Befestigungspartner (30) einteilig mit einem Gehäuse der Batteriezelle (16) ausgebildet ist.

6. Batteriemodul (14) nach einem der vorhergehenden Ansprüche, wobei die Befestigungspartner (30, 32) an einer Seite der Batteriezelle (16) angeordnet sind, die einer Seite gegenüberliegt, auf der Terminals (34) der Batteriezelle (16) angeordnet sind.

7. Batteriemodul (14) nach einem der vorhergehenden Ansprüche, wobei zwischen der Batteriezelle (16) und der Bodenplatte (18) eine, eine Vorspannkraft zwischen der Batteriezelle (16) und der Bodenplatte (18) aufbringende Zwischenschicht (28) angeordnet ist.

8. Batterie (10) mit wenigstens einem Batteriemodul (14) nach einem der Ansprüche 1 bis 7.

9. Kraftfahrzeug mit einer Batterie (10) mit wenigstens einem Batteriemodul (14) nach einem der Ansprüche 1 bis 7, wobei die Batterie (10) mit einem Antriebssystem des Kraftfahrzeugs verbunden ist.

## Claims

1. Battery module (14) having at least one battery cell (16) which is arranged on a base plate (18), the battery cell (16) and the base plate (18) being connected to one another in a stationary manner by way of at least one fastening system (26), the fastening system (26) having at least two fastening partners (30, 32) which latch into one another and produce a positively locking connection, the first fastening partner (30) being arranged on the battery cell (16) and the second fastening partner (32) being arranged on the base plate (18), and the second fastening partner (32) being formed by way of a cut-out (36) in the base plate (18) and a surface of the base plate (18), which surface adjoins the cut-out (36), **characterized in that** the first fastening partner (30) is a spring arm which protrudes into the cut-out (36) and engages behind that surface of the base plate (18) which adjoins the cut-out (36).

2. Battery module (14) according to Claim 1, at least one positively locking connection being produced by way of the two fastening partners (30, 32) in a direction which points perpendicularly away from the base plate (18).

3. Battery module (14) according to Claim 1 or 2, the at least one battery cell (16) having a prismatic shape.

4. Battery module (14) according to one of the preceding claims, the cut-out (36) in the base plate (18) being arranged below the battery cell (16).

5. Battery module (14) according to one of the preceding claims, the first fastening partner (30) being configured in one piece with a housing of the battery cell (16).

6. Battery module (14) according to one of the preceding claims, the fastening partners (30, 32) being arranged on a side of the battery cell (16), which side lies opposite a side, on which terminals (34) of the battery cell (16) are arranged.

7. Battery module (14) according to one of the preceding claims, an intermediate layer (28) which applies a prestressing force between the battery cell (16) and the base plate (18) being arranged between the battery cell (16) and the base plate (18).

8. Battery (10) having at least one battery module (14) according to one of Claims 1 to 7.

9. Motor vehicle having a battery (10) with at least one battery module (14) according to one of Claims 1 to 7, the battery (10) being connected to a drive system of the motor vehicle.

## Revendications

1. Module de batterie (14) comportant au moins un élément de batterie (16) disposé sur une plaque de base (18), dans lequel l'élément de batterie (16) et la plaque de base (18) sont reliés en position fixe l'un à l' autre par au moins un système de fixation (26), dans lequel
le système de fixation (26) comprend au moins deux éléments de fixation complémentaires (30, 32) s'enclenchant l'un dans l'autre et créant une liaison par complémentarité de forme, dans lequel le premier élément complémentaire de fixation (30) est disposé sur l'élément de batterie (16) et le second élément complémentaire de fixation (32) est disposé sur la plaque de base (18) et dans lequel le second élément complémentaire de fixation (32) est formé par un évidement (36) ménagé dans la plaque de base (18) et par une surface de la plaque de base (18) qui est adjacente à l'évidement (36), **caractérisé en ce que** le premier élément complémentaire de fixation (30) est un bras élastique faisant saillie dans l'évidement (36) et s'engageant par l'arrière sur la surface de la plaque de base (18) qui est adjacente à l'évidement (36).

2. Module de batterie (14) selon la revendication 1, dans lequel au moins une liaison par complémentarité de forme est créée par les deux éléments complémentaires de fixation (30, 32) dans une direction orientée perpendiculairement à la plaque de base (18).

3. Module de batterie (14) selon la revendication 1 ou 2, dans lequel l'au moins un élément de batterie (16) présente une forme prismatique.

4. Module de batterie (14) selon l'une quelconque des revendications précédentes, dans lequel l'évidement (36) ménagé dans la plaque de base (18) est disposé en dessous de l'élément de batterie (16).

5. Module de batterie (14) selon l'une quelconque des revendications précédentes, dans lequel le premier élément complémentaire de fixation (30) est réalisé de manière solidaire d'un boîtier de l'élément de batterie (16).

6. Module de batterie (14) selon l'une quelconque des revendications précédentes, dans lequel les éléments complémentaires de fixation (30, 32) sont disposés d'un côté de l'élément de batterie (16) qui est tourné vers un côté sur lequel sont disposées des bornes (34) de l'élément de batterie (16).

7. Module de batterie (14) selon l'une quelconque des revendications précédentes, dans lequel une couche intermédiaire (28) appliquant une force de précontrainte entre l'élément de batterie (16) et la plaque de base (18) est disposée entre l'élément de batterie (16) et la plaque de base (18).

8. Batterie (10) comportant au moins un module de batterie (14) selon l'une quelconque des revendications 1 à 7.

9. Véhicule à moteur comportant une batterie (10) munie d'au moins un module de batterie (14) selon l'une quelconque des revendications 1 à 7, dans lequel la batterie (10) est reliée à un système de propulsion du véhicule à moteur.
